(19) Europäisches Patentamt
European Patent Office
Office européen des brevets

(11) **EP 4 021 985 B1**

(12) **EUROPÄISCHE PATENTSCHRIFT**

(45) Veröffentlichungstag und Bekanntmachung des Hinweises auf die Patenterteilung:
**14.06.2023 Patentblatt 2023/24**

(21) Anmeldenummer: **21717109.9**

(22) Anmeldetag: **13.04.2021**

(51) Internationale Patentklassifikation (IPC):
*C09C 1/00* (2006.01)    *C09C 1/64* (2006.01)
*C08K 3/00* (2018.01)    *C08K 3/013* (2018.01)
*C08K 3/08* (2006.01)    *C08K 9/02* (2006.01)

(52) Gemeinsame Patentklassifikation (CPC):
**C09C 1/642; C08K 3/013; C08K 3/08; C08K 9/02; C09C 1/0021;** C01P 2004/51; C01P 2004/61; C01P 2006/60; C01P 2006/66; C08K 2003/0812; C08K 2003/2248; C08K 2003/2272; C09C 2200/1054; C09C 2200/301; C09C 2200/302

(86) Internationale Anmeldenummer:
**PCT/EP2021/059559**

(87) Internationale Veröffentlichungsnummer:
**WO 2021/219366 (04.11.2021 Gazette 2021/44)**

(54) **HOCHDECKENDE METALLEFFEKTPIGMENTE**

OPAQUE METAL EFFECT PIGMENTS

PIGMENTS HAUTE COUVRANCE À EFFET MÉTALLIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.04.2020 EP 20171634**

(43) Veröffentlichungstag der Anmeldung:
**06.07.2022 Patentblatt 2022/27**

(73) Patentinhaber: **Schlenk Metallic Pigments GmbH 91154 Roth (DE)**

(72) Erfinder:
- **HUBER, Adalbert**
  **64625 Bensheim (DE)**
- **STÖTER, Matthias**
  **90518 Altdorf bei Nürnberg (DE)**
- **SCHNEIDER, Jörg**
  **64342 Seeheim-Jugenheim (DE)**
- **HOFFMANN, Rudolf**
  **64291 Darmstadt (DE)**
- **BIES, Thorsten**
  **64285 Darmstadt (DE)**

(74) Vertreter: **Müller-Boré & Partner Patentanwälte PartG mbB Friedenheimer Brücke 21 80639 München (DE)**

(56) Entgegenhaltungen:
**EP-A1- 0 562 329      WO-A1-2017/001393 WO-A2-2005/049739**

- **M.S. LUPIN, G.E. PETERS: "Thermal Decomposition of Aluminium, Iron and Manganese Complexes of Urea", THERMOCHIMICA ACTA, Bd. 73, 1984, Seiten 79-87, XP002800451,**
- **ASUHA S ET AL: "Effects of synthetic routes of Fe-urea complex on the synthesis of @c-Fe"2O"3 nanopowder", APPLIED SURFACE SCIENCE, ELSEVIER, AMSTERDAM, NL, Bd. 255, Nr. 21, 15. August 2009 (2009-08-15), Seiten 8897-8901, XP026392463, ISSN: 0169-4332 [gefunden am 2009-06-25]**

**Beschreibung**

Die vorliegende Erfindung betrifft ein Verfahren zur Herstellung von Metalleffektpigmenten auf Basis von mit einer Metalloxidbeschichtung versehenen Aluminiumplättchen, durch das erfindungsgemäße Verfahren erhältliche Metalleffektpigmente sowie die Verwendung der erfindungsgemäßen Metalleffektpigmente.

Nach dem Stand der Technik werden farbige und lichtstabile Metalleffektpigmente durch Beschichten von dünnen plättchenförmigen Substraten aus Metall, wie z.B. Aluminium, mit Metalloxiden, wie z.B. $Fe_2O_3$ und $TiO_2$, hergestellt. Um ein hohes Deckvermögen zu erreichen, sollten die Metalleffektpigmente eine möglichst geringe Gesamtdicke aufweisen. Je dünner die Metalleffektpigmente sind, desto höher ist deren Deckkraft, da bei gleicher Masse an eingesetztem Pigment eine größere Fläche abgedeckt werden kann. Aus diesem Grund werden in der Regel möglichst dünne Metallplättchen als Substrate verwendet. Die dünnen Metallplättchen werden dabei selbst als Pigmente bezeichnet.

Entsprechende Substrate aus Aluminium, d.h. Aluminiumpigmente, werden industriell auf zwei unterschiedliche Weisen hergestellt. Relativ dünne Aluminiumplättchen können beispielsweise durch schonende und kostengünstige Nassmahlungsverfahren erhalten werden. Metallkugeln schlagen während der Mahlung rundliche Aluminiumpartikel, sogenannte Griese, aus. Abhängig von der Partikelgröße des Grieses, der Mahldauer und den eingesetzten Metallkugeln entstehen so dünne Aluminiumplättchen. Mit besonders schonenden Mahlverfahren können im industriellen Maßstab Medianwerte der Substratdicke im Bereich von 60 bis 100 nm für größere Plättchendurchmesser erreicht werden. Durch die Kaltverformung während der Mahlung weisen die Aluminiumplättchen jedoch stets eine gewisse Dickenschwankung und Oberflächenrauigkeit auf, d.h. die Aluminiumplättchen sind nicht perfekt plan. Diese Dickenschwankung und Oberflächenrauigkeit bringt auf der anderen Seite den Vorteil mit sich, dass die so erhaltenen Aluminiumplättchen beim Trocknen wenig Kontaktfläche aufweisen und daher relativ leicht agglomerationsfrei zu trocknen sind. Die agglomerationsfreie Trocknung wird allerdings mit abnehmender Substratdicke und steigender spezifischer Oberfläche zunehmend schwieriger. Außerdem sind bei steigendem Mahlfaktor, d.h. bei weiterem Ausschlagen dünner Aluminiumplättchen, die herstellungsbedingten Dickenschwankungen nachteilig. Es entstehen in der Regel Risse und streuende Ausfransungen am Rand der Aluminiumplättchen, welche Streuzentren bilden und die optischen Eigenschaften des Pigments zunehmend verschlechtern. Gerade bei Pigmenten mit größerem Durchmesser im Bereich von 20 µm oder mehr treten diese Ausfransungen verstärkt auf. Es können daher nicht beliebig dünne Aluminiumplättchen mit großem Durchmesser mittels Nassmahlung erhalten werden. Beispielsweise sind in EP 2 102 294 B1 mittels Nassmahlung erhaltene Aluminiumplättchen beschrieben, welche eine mittlere Dicke von 32 nm aufweisen, dies jedoch bei einem $d_{50}$ von weniger als 10 µm. Für Aluminiumplättchen mit einem größeren $d_{50}$ konnte eine solche mittlere Dicke ohne die vorstehend beschriebenen Risse und streuenden Ausfransungen experimentell jedoch nicht gezeigt werden. Der $d_{50}$ gibt dabei die mittlere Größe der Aluminiumplättchen an, wobei 50% der Aluminiumplättchen kleiner sind als der angegebene Wert.

Um noch dünnere Aluminiumplättchen zu erhalten, wird ein aufwendigeres und energie- und kostenintensiveres Herstellungsverfahren angewendet. Nach dem Stand der Technik werden noch dünnere Aluminiumplättchen industriell mittels physikalischer Gasphasenabscheidung (engl. physical vapor deposition, kurz PVD) hergestellt. Bei diesem Verfahren wird in der Regel eine Kunststofffolie zunächst mit einer ablösbaren Trennschicht (engl. release coat) beschichtet und im Vakuum mit einer nanometerdünnen Aluminiumschicht bedampft. Der Vorteil dieses Verfahrens gegenüber der Nassmahlung liegt in der Bildung von extrem glatten, spiegelartigen Metalloberflächen. Die nahezu perfekte Metallschicht lässt sich von der Folie ablösen und anschließend zum gewünschten Plättchen zerkleinern. Mittels PVD hergestellte Aluminiumplättchen sind daher prozessbedingt wesentlich dünner und glatter als Aluminiumplättchen, welche aus dem Nassmahlverfahren erhalten werden. Durch die geringe Dicke der mittels PVD hergestellten Aluminiumplättchen können schließlich Metalleffektpigmente erhalten werden, deren Deckvermögen deutlich höher ist als bei Verwendung von Aluminiumplättchen aus der Nassmahlung. In der Regel weisen mittels PVD hergestellte Aluminiumplättchen eine Dicke im Bereich von 5 bis 50 nm auf. Ein Nachteil der glatten Oberfläche ist jedoch die starke Agglomerationsneigung. Es entstehen sehr große Kontaktflächen, so dass die Agglomerationsneigung bei der Trocknung deutlich ausgeprägter ist als bei Aluminiumplättchen aus der Nassmahlung. Mittels PVD hergestellte Aluminiumplättchen werden mitunter auch als Vakuum-metallisierte Pigmente (engl. vacuum metallized pigments, kurz VMPs) bezeichnet.

Um ein farbiges und lichtstabiles Metalleffektpigment zu erhalten, erfolgt üblicherweise eine Beschichtung mit Metalloxiden, wie eingangs erwähnt. Das Versehen der Substrate mit farbgebenden Metalloxidbeschichtungen kann entweder in der Gasphase, etwa durch chemische Gasphasenabscheidung (engl. chemical vapor deposition, kurz CVD), oder mittels Fällung in wässrigen Prozessen, etwa durch Hydrolyse der entsprechenden Metallhalogenide, erfolgen. Die Farbe der Pigmente entsteht durch das Zusammenwirken von Absorption, Transmission und Interferenz, wobei insbesondere Dicke und Brechungsindex der Metalloxidbeschichtung die Farbe des Metalleffektpigments bestimmen.

Die direkte CVD-Beschichtung führt lediglich zu einer Oxidbeschichtung auf nur einer Seite der beiden Aluminiumoberflächen. Als Folge hiervon weist nur eine der beiden Aluminiumoberflächen eine Farbe auf. Um alle Seiten gleichmäßig mit dem Metalloxid zu beschichten, sind Wirbelschichtverfahren entwickelt worden, welche beispielsweise in EP 0 033 457 A2, DE 42 23 384 A1 und EP 0 562 329 A1 beschrieben sind.

Gewöhnlich wird hierbei ein Substrat in einer Wirbelschicht, auch Wirbelbett genannt, unter Verwendung von Eisenpentacarbonyl als Precursor und Sauerstoff als Oxidationsmittel mit Eisenoxid und gegebenenfalls mit weiteren transparenten Oxiden beschichtet. Mit dem CVD-Verfahren lassen sich bereits mit geringen Eisenoxidschichtdicken im Bereich von 20 bis 35 nm Metalleffektpigmente mit hoher Farbsättigung herstellen. Diese Metalleffektpigmente werden z.B. als Paliocrom® 2850 (Orange) bzw. Paliocrom® 2050 (Gold) im Handel vertrieben. Ein Nachteil der CVD-Beschichtung im Wirbelschichtverfahren ist die Notwendigkeit der vollständigen Fluidisierung (Bewegung) der zu beschichtenden Substrate in der Gasphase. Ohne vollständige Fluidisierung werden bei der Beschichtung Agglomerate erzeugt. Die erzeugten Agglomerate verschlechtern das Deckvermögen und schmälern die nutzbare Korngrößenfraktion, wodurch sich letztlich die Ausbeute verringert.

Die Verwendung von mittels PVD hergestellten dünnen Aluminiumplättchen im vorstehend beschriebenen Verfahren ist aufgrund der ausgeprägten Neigung zur Agglomeration und der enormen Scherempfindlichkeit industriell nicht möglich. Die extrem dünnen, nahezu perfekt glatten Aluminiumplättchen lassen sich nicht vollständig bzw. nur sehr schwierig im Wirbelbett fluidisieren. Aus diesem Grund werden industriell für die Metalloxidbeschichtung im CVD-Prozess ausschließlich mittels Nassmahlung hergestellte Aluminiumplättchen als Substrate verwendet. Wie vorstehend bereits erwähnt, sind im Vergleich zu dünnen Aluminiumplättchen, welche mittels PVD hergestellt worden sind, Aluminiumplättchen aus der Nassmahlung prozessbedingt deutlich dicker. Dementsprechend sind in DE 42 23 384 A1 Pigmente mit Dicken in einem Bereich von etwa 100 bis 200 nm angegeben, welche vergleichsweise einfach und kostengünstig mittels Nassmahlung herstellbar sind. Eine CVD-Beschichtung im Wirbelbett auf Basis von mittels PVD hergestellten dünnen Aluminiumplättchen ist bislang nicht beschrieben worden.

Eine Möglichkeit mittels PVD hergestellte dünne Aluminiumplättchen mit hochbrechenden Metalloxiden zu beschichten, ist in WO 2015/014484 A1 beschrieben. Es werden dabei dünne Aluminiumplättchen mit einer Dicke im Bereich von vorzugsweise 5 bis 30 nm verwendet. Das Pigment wird nicht im Wirbelbett, sondern durch Hydrolyse von Salzlösungen beschichtet. Es wird insgesamt ein dreischichtiger Aufbau erhalten, welcher eine Schicht aus einem hochbrechenden Metalloxid, eine niedrigbrechende Zwischenschicht, z.B. aus $SiO_2$, und eine Außenschicht aus einem niedrigbrechenden Material aufweist. Auch in WO 2009/083176 A1, worin die Herstellung von Druckfarben beschrieben ist, wird neben Pigmenten, welche durch Mahlen mit einer Kugelmühle erhalten werden, der mögliche Einsatz von mittels PVD hergestellten dünnen Aluminiumplättchen erwähnt. Die hochbrechende Metalloxidschicht wird hierdurch Hydrolyse in Wasser aufgebracht, wobei zusätzlich ein phosphorhaltiges Additiv erforderlich ist. Das Aufbringen der Metalloxidschicht in wässrigen Lösungsmitteln weist, wie auch in EP 0 033 457 A2 beschrieben, zahlreiche Nachteile auf. Der für die Fällung erforderliche pH-Wert liegt in einem Bereich, in dem es zu einer Reaktion von Aluminium mit Wasser kommen kann. Die Reaktion ist vor allem bei dünnen Aluminiumplättchen aufgrund der zunehmenden spezifischen Oberfläche kritisch. Da die Pigmente angegriffen werden, ist die Reproduzierbarkeit der Reaktion schlecht. Es müssen daher verdünnte Lösungen verwendet werden. Auch sind mehrere Arbeitsschritte zur Aufarbeitung notwendig.

Wie in WO 2005/049739 A2 beschrieben, ist das Aufbringen einer hochbrechenden Metalloxidschicht auch durch nasschemische Oxidation in organischen Lösungsmitteln möglich, allerdings beträgt der Wassergehalt im Lösungsmittel immer noch 3 bis 60 Gew.-%. Auch entsteht eine Mischschicht zwischen dem Substrat und der hochbrechenden Metalloxidschicht. In WO 2013/175339 A1 und EP 0 033 457 A2 sind alternative Verfahren beschrieben, bei denen die Beschichtung im Wirbelschichtreaktor durchgeführt wird, wodurch der Prozess wasserfrei ist. Wie vorstehend erwähnt, ergibt sich hierbei jedoch der Nachteil, dass für eine solche CVD-Beschichtung keine dünnen Aluminiumplättchen, welche mittels PVD hergestellt worden sind, eingesetzt werden können, da diese aufgrund ihrer großen spezifischen Oberfläche bei gleichzeitig geringer Oberflächenrauigkeit während der Trocknung eine stark ausgeprägte Agglomerationsneigung aufweisen. Sie lassen sich daher nur sehr schlecht reproduzierbar fluidisieren WO 2017/001393 offenbart ein Verfahren zur Herstellung von Metalleffektpigmenten, bei dem in einem Wirbelschicht Reaktor Aluminiumplättchen (d50 =18 μm) mit einem Stickstoffstrom fluidisiert, dann auf 180°C erhitzt werden und anschliessend mit Luft und Wasser beaufschlagt. Anschliessend erfolgt die Zugabe von Eisenpentacarbonyl, so dass sich ein Eisen(III)oxid auf der Oberfläche des Aluminiumplätten ausbildet.

Der vorliegenden Erfindung liegt somit die Aufgabe zugrunde, ein Verfahren zur Herstellung hochdeckender Metalleffektpigmente auf Basis von dünnen Aluminiumplättchen mit Metalloxidbeschichtung bereitzustellen, welches die vorstehend beschriebenen, im Stand der Technik bekannten Nachteile bei der Beschichtung dünner Aluminiumplättchen, wie sie etwa im CVD-basierten Wirbelschichtverfahren oder in nasschemischen Fällungsprozessen auftreten, überwindet.

Diese Aufgabe wird durch die in den Ansprüchen gekennzeichneten Ausführungsformen der vorliegenden Erfindung gelöst.

Insbesondere wird gemäß der vorliegenden Erfindung ein Verfahren zur Herstellung von Metalleffektpigmenten auf Basis von mit einer Metalloxidbeschichtung versehenen Aluminiumplättchen bereitgestellt,

wobei die Aluminiumplättchen eine Dicke von 5 bis 90 nm aufweisen und von der Metalloxidbeschichtung umhüllt sind,
wobei die Metalloxidbeschichtung aus $Fe_2O_3$, CuO, ZnO oder Gemischen davon in einer Dicke von 5 bis 150 nm aufgebaut ist und einen Brechungsindex von mindestens 1,9 aufweist,
wobei zwischen der Oberfläche der Aluminiumplättchen und der Metalloxidbeschichtung keine weitere, die Aluminiumplättchen umhüllende Beschichtung vorgesehen ist, umfassend die Schritte:

(a) Vorlegen der Aluminiumplättchen in einem organischen Lösungsmittel unter Bildung einer entsprechenden Dispersion und Zugeben von mindestens einer Metalloxidvorläuferverbindung unter Lösen der Metalloxidvorläuferverbindung, wobei die mindestens eine Metalloxidvorläuferverbindung aus der Gruppe, bestehend aus Nitraten, Acetaten, Acetylacetonaten, Malonaten, Alkoholaten, Oxalaten und Oximaten von Eisen, Kupfer oder Zink, ausgewählt ist, und

(b) Zersetzen der Metalloxidvorläuferverbindung in dem organischen Lösungsmittel unter Bildung der Metalloxidbeschichtung auf den Aluminiumplättchen.

Das erfindungsgemäße Verfahren erlaubt die Bereitstellung hochdeckender Metalleffektpigmente auf Basis von dünnen Aluminiumplättchen mit Metalloxidbeschichtung, wobei gemäß der vorliegenden Erfindung die Beschichtung der Aluminiumplättchen in einem organischen Lösungsmittel erfolgt. Durch das vergleichsweise einfache und kostengünstige Beschichtungsverfahren lassen sich Zeit und Kosten einsparen, wobei gleichzeitig die aus dem Wirbelschichtverfahren und aus nasschemischen Fällungsprozessen bekannten Nachteile überwunden werden. Insbesondere findet keine Agglomeration der dünnen Aluminiumplättchen statt. Auch werden diese nicht durch das Lösungsmittel angegriffen. Aufgrund der geringen Dicke der eingesetzten Aluminiumplättchen lässt sich gegenüber vergleichbaren Konkurrenzprodukten aus dem Stand der Technik eine deutlich höhere Deckkraft erzielen, da bei gleicher Masse an eingesetztem Pigment eine größere Fläche abgedeckt werden kann. So sind die mit dem erfindungsgemäßen Verfahren erhältlichen Metalleffektpigmente bereits bei einer Pigmentierung von 3 bis 4% im Lacksystem deckend. Die erfindungsgemäßen Metalleffektpigmente kommen für eine Vielzahl von Anwendungen in Frage, etwa für Druckfarben, insbesondere im Rahmen digitaler Druckverfahren (Inkjet), Lackierungen oder Kosmetika, wo sie unmittelbar in Form einer Paste eingesetzt werden können.
Im Folgenden wird das Verfahren zur Herstellung von Metalleffektpigmenten auf Basis von beschichteten Aluminiumplättchen gemäß der vorliegenden Erfindung näher beschrieben.
In Schritt (a) des erfindungsgemäßen Verfahrens werden die Aluminiumplättchen in einem organischen Lösungsmittel unter Bildung einer entsprechenden Dispersion vorgelegt. Ferner wird in Schritt (a) mindestens eine Metalloxidvorläuferverbindung unter Lösen der Metalloxidvorläuferverbindung zugegeben. Die Reihenfolge des Vorlegens der Aluminiumplättchen und des Zugebens der mindestens einen Metalloxidvorläuferverbindung ist dabei unerheblich, d.h. das Vorlegen der Aluminiumplättchen kann auch nach dem Zugeben der mindestens einen Metalloxidvorläuferverbindung erfolgen.
Die in Schritt (a) vorgelegten Aluminiumplättchen können passiviert sein, d.h. mit einer nativen Oxidschicht überzogen sein. Die Dicke dieser Oxidschicht beträgt typischerweise 3 bis 5 nm und wird im Rahmen der vorliegenden Erfindung in die Dicke der Aluminiumplättchen, wie nachstehend angegeben, mit einberechnet.
Gemäß der vorliegenden Erfindung weisen die Aluminiumplättchen eine Dicke im Bereich von 5 bis 90 nm, bevorzugt im Bereich von 5 bis 50 nm und noch mehr bevorzugt im Bereich von 5 bis 30 nm auf. Durch die Verwendung dünner Aluminiumplättchen kann eine besonders hohe Deckkraft erzielt werden. Bei der Dicke der Aluminiumplättchen handelt es sich um die durchschnittliche Dicke, welche als Zahlenmittel aller gemessenen Dicken zu verstehen ist. Die Ermittlung der durchschnittlichen Dicke, welche auch als mittlere Dicke bezeichnet wird, erfolgt durch Ausmessen auf Grundlage transmissionselektronenmikroskopischer (TEM) Aufnahmen. Die mittlere Dicke ist hierbei der Mittelwert von mindestens 200 Messungen unterschiedlicher Aluminiumplättchen.
Die Aluminiumplättchen, welche in Schritte (a) vorgelegt werden, weisen typischerweise eine Dickenschwankung (Δh) von höchstens 30% auf. Die Dickenschwankung beträgt bevorzugt höchstens 25%, beispielsweise höchstens 20%, mehr bevorzugt höchstens 15% und noch mehr bevorzugt höchstens 10%. Die Dickenschwankung ergibt sich aus der Breite der Dickenverteilung, welche auch als Dicken-SPAN ($t_{SPAN}$) bezeichnet wird. Die Berechnung des Dicken-SPAN erfolgt gemäß der nachstehenden Formel:

$$t_{SPAN} = \frac{t_{90} - t_{10}}{t_{50}}$$

Dabei bedeuten die Indizes in der vorstehenden Formel den jeweiligen Wert in der Summenverteilungskurve. $t_{10}$ bedeutet demnach, dass 10% der Aluminiumplättchen dünner sind als der $t_{10}$-Dickenwert, während 90% der Aluminiumplättchen eine Dicke gleich oder größer als der $t_{10}$-Dickenwert aufweisen.
Aus dem Dicken-SPAN erhält man schließlich die Dickenschwankung als prozentuale Angabe:

$$\Delta h = t_{SPAN} \times 100\%$$

In einer bevorzugten Ausführungsform der vorliegenden Erfindung sind die Aluminiumplättchen Vakuum-metallisierte Pigmente (VMPs). Es handelt sich somit in diesem Fall um dünne Aluminiumplättchen aus physikalischer Gasphasenabscheidung, welche eine extrem geringe Dickenschwankung aufweisen und somit deutlich glatter sind als Aluminiumplättchen aus der Nassmahlung. Metalleffektpigmente auf Basis von VMPs weisen nicht nur eine hohe Deckkraft auf, sondern sind auch in Bezug auf die anderen koloristischen Daten ausgezeichnet. VMPs sind kommerziell von verschiedenen Anbietern erhältlich (Decomet® von Schlenk Metallic Pigments GmbH, METAL-URE® von Eckart GmbH, Metasheen® von BASF SE).

Was die Größe der Aluminiumplättchen anbelangt, ist die vorliegende Erfindung nicht weiter eingeschränkt. Typischerweise wird die Größe der Aluminiumplättchen als $d_{50}$ angegeben. Wie bereits erwähnt, gibt der $d_{50}$ die mittlere Größe der Aluminiumplättchen an, wobei 50% der Aluminiumplättchen kleiner sind als der angegebene Wert. Der $d_{50}$ beträgt vorzugsweise 1 bis 100 $\mu$m, beispielsweise 1 bis 50 $\mu$m, 1 bis 25 $\mu$m, 1 bis 10 $\mu$m oder 1 bis 3 $\mu$m, ohne jedoch darauf beschränkt zu sein. Die Ermittlung des $d_{50}$ erfolgt durch Ausmessen auf Grundlage von Laserbeugung.

Das Verhältnis zwischen der Größe der Aluminiumplättchen und ihrer Dicke, auch als Aspektverhältnis bezeichnet, unterliegt vorliegend ebenfalls keiner weiteren Beschränkung. Es kann in einem Bereich von 50 bis 5000, 100 bis 2000 oder 200 bis 1000 liegen, ohne jedoch darauf beschränkt zu sein.

Bereits vor dem Schritt (a) können die Aluminiumplättchen in dispergierter Form vorliegen. Hierzu wird ein organisches Lösungsmittel verwendet, welches gleich oder verschieden, vorzugsweise verschieden, von dem in Schritt (a) verwendeten organischen Lösungsmittel, wie nachstehend beschrieben, ist. Ohne darauf beschränkt zu sein, können die Aluminiumplättchen vor dem Schritt (a) als Dispersion in Isopropanol vorliegen. Dieses hat keinen wesentlichen Einfluss auf den Beschichtungsvorgang in Schritt (b).

Die Aluminiumplättchen, welche bereits in dispergierter Form vorliegen können, werden in Schritt (a) des erfindungsgemäßen Verfahrens in einem organischen Lösungsmittel vorgelegt. Bei der Wahl des organischen Lösungsmittels in Schritt (a) gilt es zu beachten, dass die weiterhin zuzugebende mindestens eine Metalloxidvorläuferverbindung eine ausreichende Löslichkeit in dem betreffenden organischen Lösungsmittel aufweist. Ferner sollte die Siedetemperatur des verwendeten organischen Lösungsmittels höher liegen als die Temperatur, welche im betreffenden organischen Lösungsmittel für die Zersetzung der mindestens einen Metalloxidvorläuferverbindung in Schritt (b) erforderlich ist.

Als organisches Lösungsmittel kann in Schritt (a) beispielsweise eines verwendet werden, welches aus der Gruppe, bestehend aus 1-Methoxy-2-propanol, 2-Isopropoxyethanol, Ethylenglycolmonoethylether, Ethylenglycolmonopropylether, Triethylenglycol, Tetraethylenglycol, Polyethylenglycol 400, Propylencarbonat, N,N-Dimethylacetamid und Dimethylsulfoxid, oder Gemischen davon ausgewählt ist. Hierbei hat sich insbesondere 1-Methoxy-2-propanol, welches auch nur als Methoxypropanol bezeichnet wird, als vorteilhaft erwiesen. 1-Methoxy-2-propanol weist eine ausreichende Löslichkeit und zudem eine vergleichsweise hohe Siedetemperatur auf.

Das organische Lösungsmittel kann einen geringen Anteil an Wasser aufweisen, wobei es gemäß der vorliegenden Erfindung bevorzugt ist, dass der Wasseranteil bezogen auf 100 Massenteile des organischen Lösungsmittels nicht mehr als 1 Massenteil beträgt.

Ein Dispergieren der in dem organischen Lösungsmittel vorgelegten Aluminiumplättchen kann mittels mechanischer Einwirkung, beispielsweise durch Rühren, erreicht werden. Entsprechende Maßnahmen sind einem Fachmann bekannt.

In Schritt (a) des erfindungsgemäßen Verfahrens wird weiterhin mindestens eine Metalloxidvorläuferverbindung unter Lösen der Metalloxidvorläuferverbindung zugegeben. Wie erwähnt, kann das Zugeben der mindestens einen Metalloxidvorläuferverbindung auch zuerst, d.h. vor dem Vorlegen der Aluminiumplättchen erfolgen.

Die mindestens eine Metalloxidvorläuferverbindung, welche in Schritt (a) zugegeben wird, dient als Precursor für die in Schritt (b) unter Zersetzung der Metalloxidvorläuferverbindung gebildete Metalloxidbeschichtung, bei der es sich um eine hochbrechende Beschichtung aus einem oder mehreren Metalloxiden handelt. Entsprechend enthält die betreffende Metalloxidvorläuferverbindung das jeweilige Metall der zu bildenden Metalloxidbeschichtung, wie weiter unten beschrieben. Wie bereits vorstehend erwähnt, muss die Löslichkeit hiervon in dem verwendeten organischen Lösungsmittel ausreichend sein.

Unter einer hochbrechenden Beschichtung wird im Rahmen der vorliegenden Erfindung eine Metalloxidbeschichtung verstanden, welche einen Brechungsindex von mindestens 1,9 aufweist.

Gemäß der vorliegenden Erfindung ist das Metallatom der mindestens einen Metalloxidvorläuferverbindung Eisen, Kupfer oder Zink, wobei die Metalloxidbeschichtung aus $Fe_2O_3$, $CuO$, $ZnO$ oder Gemischen davon aufgebaut ist. All diesen Metalloxiden ist gemein, dass sie hochbrechend sind. Als Metalloxidvorläuferverbindungen kommen hierbei die jeweiligen Nitrate, Acetate, Acetylacetonate, Malonate, Alkoholate, Oxalate und Oximate von Eisen, Kupfer oder Zink zum Einsatz. Im Gegensatz zu den entsprechenden Halogeniden, Oxohalogeniden und Pseudohalogeniden haben diese den Vorteil, dass sie bei vergleichsweise niedriger Temperatur in Schritt (b) unter Bildung der Metalloxidbeschichtung zersetzt werden können. Darüber hinaus können die jeweiligen Nitrate, Acetate, Acetylacetonate, Malonate, Alkoholate, Oxalate und Oximate von Eisen, Kupfer oder Zink im Vergleich zu den entsprechenden Halogeniden, Oxohalogeniden und Pseudohalogeniden eine erhöhte Löslichkeit in dem betreffenden organischen Lösungsmittel aufweisen.

Allgemein kann das Metallatom der mindestens einen Metalloxidvorläuferverbindung in komplexierter Form vorliegen, etwa in Form eines Harnstoff- oder Harnstoffderivatkomplexes, ohne jedoch hierauf beschränkt zu sein.

Soll in Schritt (b) eine $Fe_2O_3$-Beschichtung gebildet werden, kann als Metalloxidvorläuferverbindung beispielsweise $[Fe(H_2N(CO)NH_2)_6](NO_3)_3$ verwendet werden. Soll in Schritt (b) eine CuO-Beschichtung gebildet werden, kann als Metalloxidvorläuferverbindung beispielsweise $[Cu(H_2N(CO)NH_2)_4](NO_3)_2$ verwendet werden. Soll in Schritt (b) eine ZnO-Beschichtung gebildet werden, kann als Metalloxidvorläuferverbindung beispielsweise $[Zn(H_2N(CO)NH_2)_4](NO_3)_2$ bzw. $[Zn(H_2N(CO)NH_2)_4(H_2O)_2](NO_3)_2$ verwendet werden. In all diesen Fällen ist das Metallatom durch mehrere Harnstoff-Moleküle (Urea-Liganden) sowie gegebenenfalls Wasser-Moleküle (Aqua-Liganden) komplexiert.

Die Herstellung der betreffenden Metalloxidvorläuferverbindungen ist einem Fachmann bekannt. So lassen sich die Komplexe $[Fe(H_2N(CO)NH_2)](NO_3)_3$ und $[Cu(H_2N(CO)NH_2)_4](NO_3)_2$ beispielsweise durch Umsetzung der entsprechenden Nitratsalze $Fe(NO_3)_3 \cdot (H_2O)_9$ und $Cu(NO_3)_2 \cdot (H_2O)_3$ mit Harnstoff herstellen. In gleicher Weise gilt dies auch für den Komplex $[Zn(H_2N(CO)NH_2)_4](NO_3)_2$ bzw. $[Zn(H_2N(CO)NH_2)_4(H_2O)_2](NO_3)_2$.

Anstelle einer einzigen Metalloxidvorläuferverbindung können auch zwei oder mehrere verschiedene Metalloxidvorläuferverbindungen in Schritt (a) zugegeben werden. Hierdurch lässt sich in Schritt (b) die Bildung einer Metalloxidmischschicht erreichen. Auch ist grundsätzlich die Bildung von Wechselschichten bzw. alternierenden Schichten denkbar. Gemäß der vorliegenden Erfindung ist es jedoch bevorzugt, dass nur eine Metalloxidvorläuferverbindung in Schritt (a) zugegeben wird, da sich hierdurch der Brechungsindex und somit auch die Farbe der Metalleffektpigmente besser kontrollieren lassen.

Nicht nur der Brechungsindex, sondern auch die Dicke der Metalloxidbeschichtung bestimmt maßgeblich die Farbe der Metalleffektpigmente. Die Dicke der Metalloxidbeschichtung lässt sich über die zugegebene Menge der betreffenden Metalloxidvorläuferverbindung in Schritt (a) einstellen. Bei gleicher Menge an vorgelegten Aluminiumplättchen nimmt die Dicke der Metalloxidbeschichtung naturgemäß zu, je mehr der betreffenden Metalloxidvorläuferverbindung zugegeben wird. Die Menge der zugegebenen Metalloxidvorläuferverbindung wird dabei derart eingestellt, dass in Schritt (b) eine Metalloxidbeschichtung mit einer Dicke von 5 bis 150 nm, beispielsweise 10 bis 100 nm oder 20 bis 75 nm, erhalten wird.

In Schritt (b) des erfindungsgemäßen Verfahrens wird die Metalloxidvorläuferverbindung in dem organischen Lösungsmittel unter Bildung der Metalloxidbeschichtung auf den Aluminiumplättchen zersetzt.

Um eine Zersetzung der betreffenden Metalloxidvorläuferverbindung zu erreichen, wird die Dispersion der Aluminiumplättchen mit der zugegebenen Metalloxidvorläuferverbindung in dem organischen Lösungsmittel auf die hierzu notwendige Temperatur erhitzt. Es handelt sich demnach um eine thermische Zersetzung. Wie vorstehend erwähnt, sollte die Siedetemperatur des organischen Lösungsmittels höher liegen als die Temperatur, welche im betreffenden organischen Lösungsmittel für die Zersetzung der mindestens einen Metalloxidvorläuferverbindung erforderlich ist. In Folge der thermischen Zersetzung scheidet sich das jeweilige Metalloxid auf den Aluminiumplättchen, welche gegebenenfalls passiviert sind, ab. Es bildet sich somit eine die Aluminiumplättchen umhüllende Metalloxidbeschichtung. Diese kann zunächst noch Restorganik, welche aus der betreffenden Metalloxidvorläuferverbindung stammt, enthalten.

Die so erhaltenen Metalleffektpigmente liegen nach Schritt (b) in Form einer Paste vor, welche für den entsprechenden Einsatzzweck entweder unmittelbar verwendet werden kann oder durch Austausch bzw. Wechsel des Lösungsmittels für vielfältige Einsatzzwecke ohne Trocknung angepasst werden kann. Alternativ kann jedoch eine Sprühtrocknung durchgeführt werden, sofern die Metalleffektpigmente nicht unmittelbar verwendet und stattdessen in fester Form aufbewahrt werden sollen. Auch kann ein Kalzinieren, etwa in Diphenylether, erfolgen. Hierdurch wird die aus der betreffenden Metalloxidvorläuferverbindung stammende Restorganik zersetzt.

Gemäß der vorliegenden Erfindung befindet sich zwischen der Oberfläche der Aluminiumplättchen und der sie umhüllenden Metalloxidbeschichtung, welche aus einem oder mehreren Metalloxiden in einer Dicke von 5 bis 150 nm aufgebaut ist und einen Brechungsindex von mindestens 1,9 aufweist, keine weitere, die Aluminiumplättchen umhüllende Beschichtung.

Es kann jedoch bei Bedarf eine optionale Schicht auf der Metalloxidbeschichtung gebildet sein. Sofern vorhanden, fungiert diese dann als äußere Schutzschicht und weist notwendigerweise einen Brechungsindex von kleiner 1,8 auf. Die optionale Schicht kann beispielsweise aus $SiO_2$ aufgebaut sein. Auch ist eine Modifizierung der Metalloxidbeschichtung oder der gegebenenfalls darauf gebildeten äußeren Schutzschicht mit Silanen möglich.

In einem weiteren Aspekt betrifft die vorliegende Erfindung Metalleffektpigmente auf Basis von mit einer Metalloxidbeschichtung versehenen Aluminiumplättchen, welche durch das vorstehend beschriebene erfindungsgemäße Verfahren erhältlich sind, wobei die Aluminiumplättchen eine Dicke von 5 bis 90 nm aufweisen und von der Metalloxidbeschichtung umhüllt sind,

wobei die Metalloxidbeschichtung aus $Fe_2O_3$, CuO, ZnO oder Gemischen davon in einer Dicke von 5 bis 150 nm aufgebaut ist und einen Brechungsindex von mindestens 1,9 aufweist, und

wobei zwischen der Oberfläche der Aluminiumplättchen und der Metalloxidbeschichtung keine weitere, die Aluminiumplättchen umhüllende Beschichtung vorgesehen ist.

Für die erfindungsgemäßen Metalleffektpigmente gelten die vorstehenden Ausführungen in Bezug auf das erfindungsgemäße Verfahren zur Herstellung von Metalleffektpigmenten analog.

Die erfindungsgemäßen Metalleffektpigmente weisen einen Farbabstand dE110° von weniger als 1,5 bei einer Pigmentierung von 3% auf. Bei einer Pigmentierung von 4% können die erfindungsgemäßen Metalleffektpigmente sogar einen Farbstand dE110° von weniger als 1,0 aufweisen. Der Farbabstand dE110°, welcher ein Maß für die Deckkraft der Metalleffektpigmente ist, wird in Übereinstimmung mit der Norm DIN 55987 gemessen.

Schließlich betrifft die vorliegende Erfindung die Verwendung der erfindungsgemäßen Metalleffektpigmente für Druckfarben, Tintenstrahlapplikationen, Lackierungen, Kunststoffmasseneinfärbungen oder Kosmetika. Wie vorstehend erwähnt, können die erfindungsgemäßen Metalleffektpigmente, welche durch eine hohe Deckkraft gekennzeichnet sind, in vielen Fällen unmittelbar in Form einer Paste eingesetzt werden, ohne vorher getrocknet zu werden. Vor allem für digitale Druckverfahren (Inkjet) haben sich die erfindungsgemäßen Metalleffektpigmente als besonders vorteilhaft erwiesen.

Die vorliegende Erfindung erlaubt die Bereitstellung von hochdeckenden Metalleffektpigmenten auf Basis von dünnen Aluminiumplättchen mit Metalloxidbeschichtung, welche sich auf einfache und kostengünstige Weise herstellen lassen. Insbesondere überwindet die vorliegende Erfindung die im Stand der Technik bekannten Nachteile bei der Beschichtung dünner Aluminiumplättchen, wie sie etwa im CVD-basierten Wirbelschichtverfahren oder in nasschemischen Fällungsprozessen auftreten.

Figurenbeschreibung

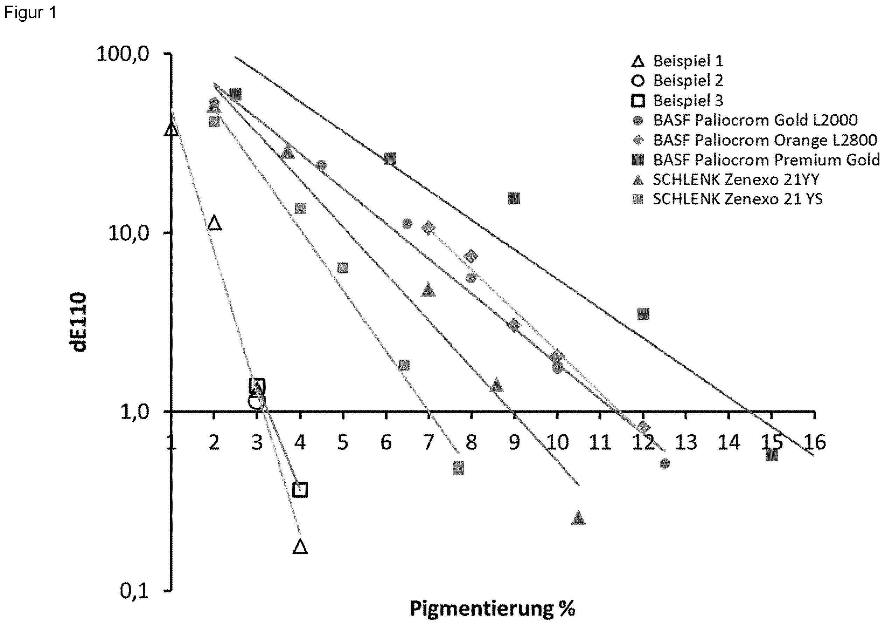

Figur 1 zeigt eine Auftragung des Farbabstandes dE110° als Funktion der Pigmentierung (in %) für erfindungsgemäße Metalleffektpigmente sowie für Metalleffektpigmente aus dem Stand der Technik.

**Beispiele**

Die nachstehenden Beispiele dienen der weiteren Erläuterung der vorliegenden Erfindung, ohne jedoch darauf beschränkt zu sein.

**Beispiel 1**

**Pulver aus mit Fe$_2$O$_3$-Beschichtung versehenen Aluminiumplättchen**

Synthese der Metalloxidvorläuferverbindung [Fe(H$_2$N(CO)NH$_2$)$_6$](NO$_3$)$_3$:

30,062 g (0,5005 mol) Harnstoff wurden in 700 mL Ethanol unter leichtem Erwärmen (40°C) gelöst. Anschließend wurde eine Lösung von 31,11 g (0,077 mol) Fe(NO$_3$)$_3$·(H$_2$O)$_9$ in 175 mL Ethanol zugegeben. Die Lösung wurde für zwei Stunden gerührt, woraufhin der gebildete Feststoff [Fe(H$_2$N(CO)NH$_2$)$_6$](NO$_3$)$_3$ abfiltriert, mit Ethanol gewaschen und für zwölf Stunden im Trockenschrank bei 50°C getrocknet wurde. Die Ausbeute betrug 33,8 g (73%).

Beschichtung von dünnen Aluminiumplättchen durch thermische Zersetzung von Fe(H$_2$N(CO)NH$_2$)$_{61}$(NQ$_3$)$_3$ in Lösung:

11 g einer Dispersion von Aluminiumplättchen in Isopropanol, enthaltend 1,1 g Aluminiumplättchen (VMPs, Decomet® von Schlenk Metallic Pigments GmbH) mit einer Dicke von 25 nm und einem d$_{50}$ von 21 μm, wurden in 1 L 1-Methoxy-2-propanol dispergiert. Darin wurden 10 g [Fe(H$_2$N(CO)NH$_2$)$_6$](NO$_3$)$_3$ gelöst und die Dispersion wurde für zwei Stunden unter Rückfluss zum Sieden erhitzt (120°C).

In zwei weiteren Schritten wurden anschließend jeweils nach Abkühlen je 10 g [Fe(H$_2$N(CO)NH$_2$)$_6$](NO$_3$)$_3$ zugegeben und die Dispersion wurde für je zwei Stunden unter Rückfluss zum Sieden erhitzt. Insgesamt wurden somit 30 g der Metalloxidvorläuferverbindung eingesetzt.

Nach Abkühlen wurde die so erhaltene Probe abfiltriert, mit Isopropanol gewaschen und ohne Trocknung in Isopropanol dispergiert. Die Suspension wurde anschließend sprühgetrocknet, woraufhin schließlich ein goldfarbenes Pulver erhalten wurde.

**Beispiel 2**

**Suspension aus mit Fe$_2$O$_3$-Beschichtung versehenen Aluminiumplättchen**

Synthese der Metalloxidvorläuferverbindung [Fe(H$_2$N(CO)NH$_2$)$_6$](NO$_3$)$_3$:

Die Synthese erfolgte analog zu Beispiel 1.

Beschichtung von dünnen Aluminiumplättchen durch thermische Zersetzung von [Fe(H$_2$N(CO)NH$_2$)$_6$](NO$_3$)$_3$ in Lösung:

1 g einer Dispersion von Aluminiumplättchen in Isopropanol, enthaltend 0,24 g Aluminiumplättchen (VMPs, Decomet® von Schlenk Metallic Pigments GmbH) mit einer Dicke von 25 nm und einem d$_{50}$ von 21 μm, wurden in 100 mL 1-Methoxy-2-propanol und 0,5 mL Wasser dispergiert. Darin wurden 0,5 g [Fe(H$_2$N(CO)NH$_2$)$_6$](NO$_3$)$_3$ gelöst und die Dispersion wurde für zwei Stunden unter Rückfluss zum Sieden erhitzt (120°C). Nach Abkühlen wurden weitere 0,5 g [Fe(H$_2$N(CO)NH$_2$)$_6$](NO$_3$)$_3$ zugegeben und die Dispersion wurde wieder für zwei Stunden unter Rückfluss zum Sieden erhitzt.

Nach Abkühlen wurde das Lösungsmittel langsam abfiltriert, wobei ein vollständiges Eintrocknen der zwischenzeitlich erhaltenen Probe vermieden wurde. Diese wurde sodann in 100 mL frischem 1-Methoxy-2-propanol und 0,5 mL Wasser dispergiert. Es wurden wieder 0,5 g [Fe(H$_2$N(CO)NH$_2$)$_6$](NO$_3$)$_3$ zugegeben und die Dispersion wurde für zwei Stunden unter Rückfluss zum Sieden erhitzt. Nach Abkühlen wurden schließlich weitere 0,5 g [Fe(H$_2$N(CO)NH$_2$)$_6$](NO$_3$)$_3$ zugegeben und die Dispersion wurde wieder für zwei Stunden unter Rückfluss zum Sieden erhitzt.

Der vorstehende Schritt wurde als Ganzes einmal wiederholt, sodass insgesamt 3,0 g der Metalloxidvorläuferverbindung eingesetzt wurden.

Nach Abkühlen wurde die so erhaltene Probe abfiltriert, mit Isopropanol und Ethylacetat gewaschen und ohne Trocknung in Ethylacetat redispergiert, woraufhin schließlich eine goldfarbene Suspension erhalten wurde.

**Beispiel 3**

**Pulver aus mit CuO-Beschichtung versehenen Aluminiumplättchen**

Synthese der Metalloxidvorläuferverbindung [Cu(H$_2$N(CO)NH$_2$)$_4$](NO$_3$)$_2$:

2,7 g (0,045 mol) Harnstoff wurden in 100 mL Butanol unter leichtem Erwärmen (40°C) gelöst. Nach Abkühlen auf Raumtemperatur wurden 2,42 g (0,01 mol) Cu(NO$_3$)$_2$·(H$_2$O)$_3$ zugegeben. Die Lösung wurde für zwei Stunden gerührt, woraufhin der gebildete Feststoff [Cu(H$_2$N(CO)NH$_2$)$_4$](NO$_3$)$_2$ abfiltriert, mit Butanol und Aceton gewaschen und für 16 Stunden im Trockenschrank bei 50°C getrocknet wurde. Die Ausbeute betrug 3,176 g (74,3%).

Beschichtung von dünnen Aluminiumplättchen durch thermische Zersetzung von [Cu(H$_2$N(CO)NH$_2$)$_4$](NO$_3$)$_2$ in Lösung:

1 g einer Dispersion von Aluminiumplättchen in Isopropanol, enthaltend 0,24 g Aluminiumplättchen (VMPs Decomet® von Schlenk Metallic Pigments GmbH) mit einer Dicke von 25 nm und einem d$_{50}$ von 21 μm, wurden in 100 mL 1-Methoxy-2-propanol dispergiert. Darin wurden in mehreren Schritten unterschiedliche Mengen von [Cu(H$_2$N(CO)NH$_2$)$_4$](NO$_3$)$_2$ gelöst und die Dispersion wurde je Schritt für zwei Stunden unter Rückfluss zum Sieden erhitzt (120°C).

In den ersten beiden Schritten wurden je 0,2 g [Cu(H$_2$N(CO)NH$_2$)$_4$](NO$_3$)$_2$ zugegeben, während in den beiden folgenden Schritten je 0,3 g [Cu(H$_2$N(CO)NH$_2$)$_4$](NO$_3$)$_2$ zugegeben wurden. Daraufhin wurde die zwischenzeitlich erhaltene Probe langsam abfiltriert, ohne dabei einzutrocknen, und in 100 mL 1-Methoxy-2-propanol redispergiert. In zwei weiteren Schritten wurden sodann je 0,5 g [Cu(H$_2$N(CO)NH$_2$)$_4$](NO$_3$)$_2$ zugegeben.

Noch einmal wurde die zwischenzeitlich erhaltene Probe abfiltriert, ohne dabei einzutrocknen, und wieder in 100 mL 1-Methoxy-2-propanol redispergiert. In zwei weiteren Schritten wurden noch je 0,5 g [Cu(H$_2$N(CO)NH$_2$)$_4$](NO$_3$)$_2$ zugegeben. Insgesamt wurden somit 3,0 g der Metalloxidvorläuferverbindung eingesetzt.

Im Anschluss wurde die so erhaltene Probe abfiltriert, ohne dabei einzutrocknen, in 50 mL Diphenylether dispergiert und für fünf Minuten zum Sieden erhitzt (258°C). Nach Abkühlen wurde die Probe abfiltriert, mit Ethanol, Aceton und Diethylether gewaschen und für 16 Stunden bei 50°C getrocknet, woraufhin schließlich ein blass goldfarbenes Pulver erhalten wurde.

**Untersuchung der koloristischen Daten**

Die Metalleffektpigmente aus den Beispielen 1 bis 3 wurden im Hinblick auf ihre koloristischen Daten näher untersucht und einem Vergleich mit Metalleffektpigmenten aus dem Stand der Technik unterzogen.

Die Bestimmung der koloristischen Daten erfolgte durch Vermessen entsprechender Draw-Down-Karten. Hierzu wurden Draw-Down-Rakelungen der jeweiligen Metalleffektpigmente mit unterschiedlicher Pigmentierung in einem lösungsmittelbasierten Nitrocellulose/Polycyclohexanon/Polyacryl-Lack mit einem Festkörperanteil von 10% auf einem schwarz-weißen DIN A5-Karton der Firma TQC mit einer 38 $\mu$m-Spiralrakel auf einem automatischen Filmziehgerät der Firma Zehntner hergestellt. Die Pigmentierung bezieht sich hier jeweils auf den Pigmentanteil im Gesamtlackansatz. Sämtliche Prozentangaben sind hier als Gew.-% zu verstehen.

Abgesehen von der 60°-Glanzmessung erfolgte die Vermessung der koloristischen Daten mit dem Gerät Byk-mac i der Firma Byk. Zur Bestimmung des Deckvermögens, ausgedrückt durch den Farbabstand dE110°, wurden die koloristischen Daten auf der weißen und schwarzen Seite des DIN A5-Kartons vermessen. Die 60°-Glanzmessung erfolgte mit dem Gerät Byk micro-TRI-gloss der Fima Byk. Die Ergebnisse sind in der nachstehenden Tabelle 1 zusammengefasst:

Tabelle 1

| Beispiel | Aufarbeitung | Pigmentierung (in %) | Glanz 60° | huv 15*S | dE15° | dE110° | dE45° | AL |
|---|---|---|---|---|---|---|---|---|
| Beispiel 1 | getrocknet (Pulver) | 1 | 75,9 | 69,6 | 3,6 | 38,4 | 20,4 | 23,5 |
| | | 2 | 61,4 | 69,8 | 0,6 | 11,5 | 4,1 | 23,2 |
| | | 3 | 52,5 | 69,8 | 0,2 | 1,3 | 0,3 | 23,6 |
| | | 4 | 51,6 | 69,9 | 0,2 | 0,2 | 0,4 | 23,9 |
| Beispiel 2 | ungetrocknet (Suspension) | 3 | 101,0 | 70,9 | 1,6 | 1,1 | 0,2 | 32,3 |
| Beispiel 3 | getrocknet (Pulver) | 3 | 47,9 | 65,1 | 0,2 | 1,4 | 0,2 | 18,2 |
| | | 4 | 36,8 | 64,3 | 0,5 | 0,4 | 0,3 | 16,1 |

Die in Tabelle 1 enthaltenen Werte für den Farbabstand dE110° der erfindungsgemäßen Metalleffektpigmente aus den Beispielen 1 bis 3 sind in Figur 1 als Funktion der Pigmentierung (in %) aufgetragen. Zudem zeigt Figur 1 die Werte für den Farbabstand dE110° von Metalleffektpigmenten aus dem Stand der Technik, welche nach dem gleichen Messverfahren bestimmt wurden. Wie bei einem Vergleich der Werte deutlich wird, weisen die erfindungsgemäßen Metalleffektpigmente eine deutlich höhere Decckraft auf, was sich in einem kleineren Wert für den Farbabstand dE110° manifestiert. So wird bereits bei einer Pigmentierung von 3% ein Farbabstand dE110° von weniger als 1,5 erhalten. Bei einer Pigmentierung von 4% beträgt der Farbabstand dE110° sogar deutlich weniger als 1,0. Bei den Metalleffektpigmenten aus dem Stand der Technik bedarf es hierzu hingegen einer etwa doppelt so großen Pigmentierung.

**Patentansprüche**

1. Verfahren zur Herstellung von Metalleffektpigmenten auf Basis von mit einer Metalloxidbeschichtung versehenen Aluminiumplättchen,

wobei die Aluminiumplättchen eine Dicke von 5 bis 90 nm aufweisen und von der Metalloxidbeschichtung umhüllt sind,
wobei die Metalloxidbeschichtung aus $Fe_2O_3$, CuO, ZnO oder Gemischen davon in einer Dicke von 5 bis 150 nm aufgebaut ist und einen Brechungsindex von mindestens 1,9 aufweist,
wobei zwischen der Oberfläche der Aluminiumplättchen und der Metalloxidbeschichtung keine weitere, die Aluminiumplättchen umhüllende Beschichtung vorgesehen ist,
umfassend die Schritte:

(a) Vorlegen der Aluminiumplättchen in einem organischen Lösungsmittel unter Bildung einer entsprechenden Dispersion und Zugeben von mindestens einer Metalloxidvorläuferverbindung unter Lösen der Metalloxidvorläuferverbindung, wobei die mindestens eine Metalloxidvorläuferverbindung aus der Gruppe, bestehend aus Nitraten, Acetaten, Acetylacetonaten, Malonaten, Alkoholaten, Oxalaten und Oximaten von Eisen, Kupfer oder Zink, ausgewählt ist, und

(b) Zersetzen der Metalloxidvorläuferverbindung in dem organischen Lösungsmittel unter Bildung der Metalloxidbeschichtung auf den Aluminiumplättchen.

2. Verfahren gemäß Anspruch 1, wobei die Aluminiumplättchen eine Dickenschwankung ($\Delta h$) von höchstens 30% aufweisen.

3. Verfahren gemäß Anspruch 1 oder 2, wobei die Aluminiumplättchen Vakuum-metallisierte Pigmente sind.

4. Verfahren gemäß einem der Ansprüche 1 bis 3, wobei das organische Lösungsmittel aus der Gruppe, bestehend aus 1-Methoxy-2-propanol, 2-Isopropoxyethanol, Ethylenglycolmonoethylether, Ethylenglycolmonopropylether, Triethylenglycol, Tetraethylenglycol, Polyethylenglycol 400, Propylencarbonat, N,N-Dimethylacetamid und Dimethylsulfoxid, oder Gemischen davon ausgewählt ist.

5. Verfahren gemäß Anspruch 4, wobei das organische Lösungsmittel 1-Methoxy-2-propanol ist.

6. Verfahren gemäß einem der Ansprüche 1 bis 5, wobei die Aluminiumplättchen bereits vor dem Schritt (a) in dispergierter Form vorliegen und hierzu ein organisches Lösungsmittel verwendet wird, welches gleich oder verschieden, vorzugsweise verschieden, von dem in Schritt (a) verwendeten organischen Lösungsmittel ist.

7. Verfahren gemäß Anspruch 6, wobei die Aluminiumplättchen vor dem Schritt (a) als Dispersion in Isopropanol vorliegen.

8. Verfahren gemäß einem der Ansprüche 1 bis 7, wobei das Metallatom der mindestens einen Metalloxidvorläuferverbindung in komplexierter Form vorliegt.

9. Verfahren gemäß Anspruch 8, wobei die komplexierte Form ein Harnstoff- oder Harnstoffderivatkomplex ist.

10. Verfahren gemäß einem der Ansprüche 1 bis 9, wobei die mindestens eine Metalloxidvorläuferverbindung aus der Gruppe, bestehend aus $[Fe(H_2N(CO)NH_2)_6](NO_3)_3$, $[Cu(H_2N(CO)NH_2)_4](NO_3)_2$ und $[Zn(H_2N(CO)NH_2)_4](NO_3)_2$, ausgewählt ist.

11. Metalleffektpigmente auf Basis von mit einer Metalloxidbeschichtung versehenen Aluminiumplättchen, erhältlich durch das Verfahren gemäß einem der Ansprüche 1 bis 10,

wobei die Aluminiumplättchen eine Dicke von 5 bis 90 nm aufweisen und von der Metalloxidbeschichtung umhüllt sind,

wobei die Metalloxidbeschichtung aus $Fe_2O_3$, CuO, ZnO oder Gemischen davon in einer Dicke von 5 bis 150 nm aufgebaut ist und einen Brechungsindex von mindestens 1,9 aufweist, und

wobei zwischen der Oberfläche der Aluminiumplättchen und der Metalloxidbeschichtung keine weitere, die Aluminiumplättchen umhüllende Beschichtung vorgesehen ist.

12. Metalleffektpigmente gemäß Anspruch 11, wobei die Metalleffektpigmente einen Farbabstand dE110° von weniger als 1,5 bei einer Pigmentierung von 3% aufweisen.

13. Verwendung der Metalleffektpigmente gemäß Anspruch 11 oder 12 für Druckfarben, Tintenstrahlapplikationen, Lackierungen, Kunststoffmasseneinfärbungen oder Kosmetika.

**Claims**

1. A method for producing metallic effect pigments on the basis of aluminum flakes furnished with a metal oxide coating,

wherein the aluminum flakes have a thickness of 5 to 90 nm and are enveloped by the metal oxide coating,

wherein the metal oxide coating is composed of $Fe_2O_3$, CuO, ZnO, or mixtures thereof in a thickness of 5 to 150 nm and has a refractive index of at least 1.9, wherein no further coating enveloping the aluminum flakes is provided between the surface of the aluminum flakes and the metal oxide coating,

comprising the steps of:

(a) Introducing the aluminum flakes in an organic solvent, with formation of a corresponding dispersion, and adding at least one metal oxide precursor compound, with dissolution of the metal oxide precursor compound, wherein the at least one metal oxide precursor compound is selected from the group consisting of nitrates, acetates, acetylacetonates, malonates, alkoxides, oxalates and oximates of iron, copper or zinc, and

(b) Decomposing the metal oxide precursor compound in the organic solvent, to form the metal oxide coating on the aluminum flakes.

2. The method as claimed in claim 1, wherein the aluminum flakes have a thickness fluctuation ($\Delta h$) of at most 30%.

3. The method as claimed in claim 1 or 2, wherein the aluminum flakes are vacuummetallized pigments.

4. The method as claimed in any of claims 1 to 3, wherein the organic solvent is selected from the group consisting of 1-methoxy-2-propanol, 2-isopropoxyethanol, ethylene glycol monoethyl ether, ethylene glycol monopropyl ether, triethylene glycol, tetraethylene glycol, polyethylene glycol 400, propylene carbonate, N,N-dimethylacetamide and dimethyl sulfoxide, or mixtures thereof.

5. The method as claimed in claim 4, wherein the organic solvent is 1-methoxy-2-propanol.

6. The method as claimed in any of claims 1 to 5, wherein the aluminum flakes even before step (a) are present in dispersed form and to that end an organic solvent is used which is identical or different, preferably different, from the organic solvent used in step (a).

7. The method as claimed in claim 6, wherein the aluminum flakes before step (a) are present as a dispersion in isopropanol.

8. The method as claimed in any of claims 1 to 7, wherein the metal atom of the at least one metal oxide precursor compound is present in complexed form.

9. The method as claimed in claim 8, wherein the complexed form is a urea complex or urea derivative complex.

10. The method as claimed in any of claims 1 to 9, wherein the at least one metal oxide precursor compound is selected from the group consisting of $[Fe(H_2N(CO)NH_2)_6](NO_3)_3$, $[Cu(H_2N(CO)NH_2)_4](NO_3)_2$ and $[Zn(H_2N(CO)NH_2)_4](NO_3)_2$.

11. A metallic effect pigment on the basis of aluminum flakes furnished with a metal oxide coating, obtainable by the method as claimed in any of claims 1 to 10,

wherein the aluminum flakes have a thickness of 5 to 90 nm and are enveloped by the metal oxide coating, wherein the metal oxide coating is composed of $Fe_2O_3$, CuO, ZnO, or mixtures thereof in a thickness of 5 to 150 nm and has a refractive index of at least 1.9, and wherein no further coating enveloping the aluminum flakes is provided between the surface of the aluminum flakes and the metal oxide coating.

12. The metallic effect pigment as claimed in claim 11, wherein the metallic effect pigment has a color difference dE110° of less than 1.5 at a pigmentation of 3%.

13. The use of the metallic effect pigment as claimed in claim 11 or 12 for printing inks, inkjet applications, coating systems, mass colorations of plastic, or cosmetics.

**Revendications**

1. Procédé de production de pigments à effet métallique sur la base de paillettes d'aluminium garnies d'un enrobage d'oxyde métallique,

dans lequel les paillettes d'aluminium ont une épaisseur de 5 à 90 nm et sont enveloppées de l'enrobage d'oxyde métallique,

dans lequel l'enrobage d'oxyde métallique est composé de $Fe_2O_3$, CuO, ZnO, ou de mélanges de ceux-ci à une épaisseur de 5 à 150 nm et a un indice de réfraction d'au moins 1,9,

dans lequel aucun autre enrobage enveloppant les paillettes d'aluminium n'est prévu entre la surface des paillettes d'aluminium et l'enrobage d'oxyde métallique, comprenant les étapes consistant à :

(a) introduire les paillettes d'aluminium dans un solvant organique, avec formation d'une dispersion correspondante, et ajouter au moins un composé précurseur d'oxyde métallique, avec dissolution du composé précurseur d'oxyde métallique, dans lequel l'au moins un composé précurseur d'oxyde métallique est sélectionné parmi le groupe constitué de nitrates, d'acétates, d'acétylacétonates, de malonates, d'alcoxydes, d'oxalates et d'oxymates de fer, cuivre ou zinc, et

(b) décomposer le composé précurseur d'oxyde métallique dans le solvant organique pour former l'enrobage d'oxyde métallique sur les paillettes d'aluminium.

2. Procédé selon la revendication 1, dans lequel les paillettes d'aluminium ont une fluctuation d'épaisseur (∆h) d'au plus 30 %.

3. Procédé selon la revendication 1 ou 2, dans lequel les paillettes d'aluminium sont des pigments métallisés sous vide.

4. Procédé selon l'une quelconque des revendications 1 à 3, dans lequel le solvant organique est sélectionné parmi le groupe constitué du 1-méthoxy-2-propanol, du 2-isopropoxyéthanol, de l'éther monoéthylique d'éthylène glycol, de l'éther monopropylique d'éthylène glycol, du triéthylène glycol, du tétraéthylène glycol, du polyéthylène glycol 400, du carbonate de propylène, du N,N-diméthylacétamide et du diméthylsulfoxyde, ou de mélanges de ceux-ci.

5. Procédé selon la revendication 4, dans lequel le solvant organique est le 1-méthoxy-2-propanol.

6. Procédé selon l'une quelconque des revendications 1 à 5, dans lequel les paillettes d'aluminium même avant l'étape (a) sont présentes sous forme dispersée et à cet effet un solvant organique est utilisé, lequel est identique ou différent, de préférence différent, au/du solvant organique utilisé à l'étape (a).

7. Procédé selon la revendication 6, dans lequel les paillettes d'aluminium avant l'étape (a) sont présentes en tant que dispersion dans de l'isopropanol.

8. Procédé selon l'une quelconque des revendications 1 à 7, dans lequel l'atome métallique de l'au moins un composé précurseur d'oxyde métallique est présent sous forme complexée.

9. Procédé selon la revendication 8, dans lequel la forme complexée est un complexe d'urée ou un complexe de dérivé d'urée.

10. Procédé selon l'une quelconque des revendications 1 à 9, dans lequel l'au moins un composé précurseur d'oxyde métallique est sélectionné parmi le groupe constitué de $[Fe(H_2N(CO)NH_2)_6](NO_3)_3$, $[Cu(H_2N(CO)NH_2)_4](NO_3)_2$ et $[Zn(H_2N(CO)NH_2)_4](NO_3)_2$.

11. Pigment à effet métallique sur la base de paillettes d'aluminium garnies d'un enrobage d'oxyde métallique, pouvant être obtenu par le procédé selon l'une quelconque des revendications 1 à 10,

dans lequel les paillettes d'aluminium ont une épaisseur de 5 à 90 nm et sont enveloppées de l'enrobage d'oxyde métallique,

dans lequel l'enrobage d'oxyde métallique est composé de $Fe_2O_3$, CuO, ZnO, ou de mélanges de ceux-ci à une épaisseur de 5 à 150 nm et a un indice de réfraction d'au moins 1,9, et

dans lequel aucun autre enrobage enveloppant les paillettes d'aluminium n'est prévu entre la surface des paillettes d'aluminium et l'enrobage d'oxyde métallique.

12. Pigment à effet métallique selon la revendication 11, dans lequel le pigment à effet métallique a une différence de couleur dE110° de moins de 1,5 à une pigmentation de 3 %.

13. Utilisation du pigment à effet métallique selon la revendication 11 ou 12 pour encres d'impression, applications à jet d'encre, systèmes d'enrobage, colorations en masse de plastique ou produits cosmétiques.

Figur 1

EP 4 021 985 B1

**EP 4 021 985 B1**

**IN DER BESCHREIBUNG AUFGEFÜHRTE DOKUMENTE**

**In der Beschreibung aufgeführte Patentdokumente**

- EP 2102294 B1
- EP 0033457 A2
- DE 4223384 A1
- EP 0562329 A1
- WO 2015014484 A1
- WO 2009083176 A1
- WO 2005049739 A2
- WO 2013175339 A1
- WO 2017001393 A